# EUROPEAN PATENT APPLICATION

(11) **EP 0 855 808 A2**
(43) Date of publication of application: **29.07.1998**
(21) Application number: 98100983.0
(22) Date of filing: 21.01.1998
(51) Int. Cl.: H04B 7/26, H04Q 7/36

(54) **Method and device for the extension of the coverage area of a fixed transceiver station (RFP) in a TDMA system**

(30) Priority: 24.01.1997 IT MI970132
(71) Applicant: Italtel s.p.a., 20149 Milano (IT)
(72) Inventor: De Benedittis, Rossella, 20020 Barbaiana Di Lainate (MI) (IT); Rosina, Giancarlo, 20018 Sedriano (MI) (IT); Saltini, Giorgio, 20156 Milano (IT)
(74) Representative: Giustini, Delio

(57) **Abstract**

Method for the extension of the coverage area of a fixed transceiver station (RFP) belonging to a system of the Time Division Multiple Access, or TDMA, type which includes a plurality of these stations (RFP) connected via radio with portable user parts (PP).
This method may advantageously be applied in any system of TDMA type where the channels may be grouped as time/frequency matrix, as happens for example in the DECT system.
The method provides the steps of:
a) connecting with this fixed transceiver station a number N of sectorial antennas (SA) through a switching device (SW);
b) subdividing, in static or dynamic manner, this matrix of channels in N sectors;
c) activating, in absence of active connection-oriented or connectionless traffic channels, a dummy channel for each sector;
d) transmitting, on each dummy channel or active traffic channel of a sector, specific system information which inhibits the access of the portable parts (PP) to channel allocated in a different sector of the channels matrix from the one to which the received channel belongs.

## Description

### Field of the Invention

This invention relates to a method and to a device to extend the coverage area of a basic radio station belonging to a system of the Time Division multiple Access type (TDMA).

The following description will make clear reference to a personal or cordless telephone TDMA system known as DECT (Digital Enhanced Cordless Telecommunications) system: this reference should not, however, be considered as limiting the scope of the invention, being the invention advantageously be applied in any system of TDMA type where the channels may be grouped as time/frequency matrix.

As known, the DECT system includes a plurality of fixed transceiver stations distributed in such a way as to cover the areas involved, and connected with a switching network which may be the public one or a switching network of private type (PABX), and portable user parts which are connected via radio with the fixed stations and are therefore capable of communicating among themselves and with other fixed users connected with the telephone system. The connections may be of vocal type, or permit exchanges of data occupying the equivalent of one or more vocal 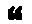 channels 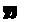 .

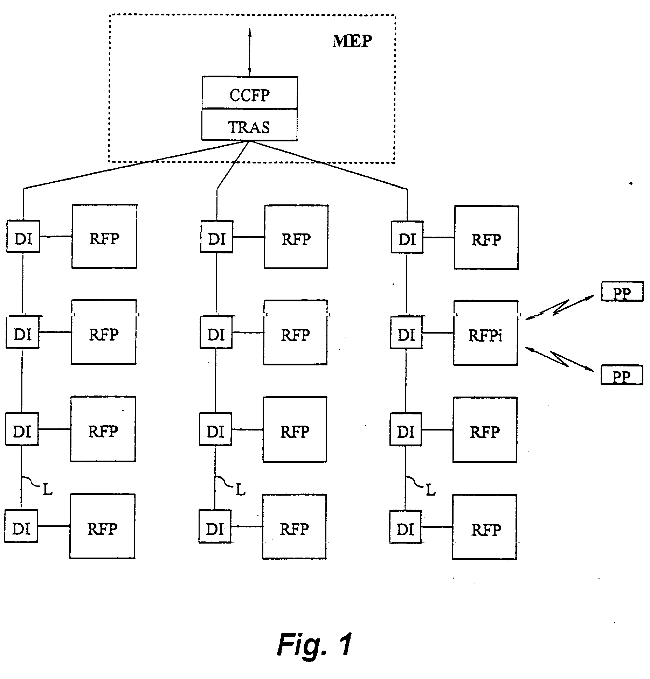

A first structure of DECT system is schematically illustrated as example in Fig. 1.

It includes groups of h (in the example in figure h = 4) RFP (Radio Fixed Parts), preferentially connected with branches (in the example 3 branches) formed by connecting lines or L ridges by means of DI drop/insert devices. Without departing from the scope of the present invention, it is obviously possible to connect according to a "star approach connection" each RFP station with the CCFP unit, eliminating the above mentioned ridges and therefore obviously also the DI drop/insert devices.

Each fixed station (or Radio Fixed Part) RFP may manage a certain number of PP (Portable Part) users, who are generally mobile, via radio.

The branches lead to a group of TRAS transcoders, and the latter is connected, for example, with the PSTN (Public Switching Telephone Network) by means of a CCFP (Central Control Fixed Part) which is associated with a switching network or to a specialized peripheral module MEP.

As regards the vocal signal, the interface between the CCFP and DECT network is typically composed of 64 Kbit/s digital channels. The CCFP unit is associated with a group of TRAS transcoders adapted to convert the PCM (Pulse Code Modification) code on eight bits, used on the PSTN side in an ADPCM (Adaptive Differential Pulse Code Modulation) code on four bits used on the DECT side. In this way two 32 Kbit/s channels are multiplexed on each 64 Kbit/s channel.

The 2,048 Mbit/s ridge (bidirectional) which connects the CCFP with the different RFPs therefore supports 48 voice channels plus a predetermined number of synchronism and signalling channels.

The area covered by a fixed station or cell is generally rather small, reaching a radius of tens or hundreds of meters. Typical applications of the personal telephone systems are found in industrial installations where they may substitute the preparation of a cabled system, in shopping or municipal centers, where they may advantageously substitute public telephone booths, and others.

The telecommunications system for personal telephony is of digital type. The radio access falls within the FDMA - TDMA - TDD category.

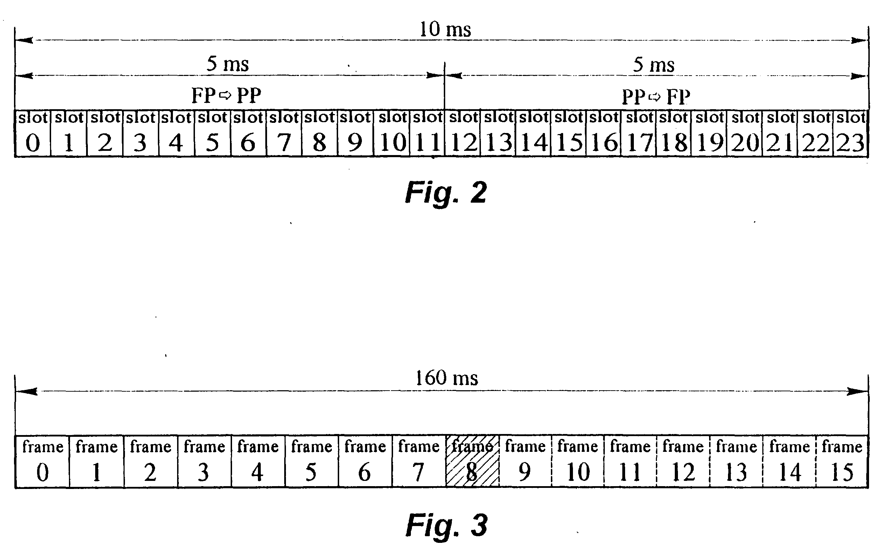

The system is of TDD (Time Division Duplex) type since the transmission and reception do not take place simultaneously. More precisely, as illustrated with reference to figure 2, the basic frame of 10 milliseconds is divided in two half frames: only in the first 5 ms the fixed station transmits and the portables receive (half frame TX DECT for the fixed station, and RX DECT for the portable) and in the following 5 ms the opposite takes place. Each half frame is formed by 12 time slots (from which it derives that it is a TDMA system) of full type (see DECT ETS 300 175 specification), each of which consists of 420 (or, depending on the circumstances, 424) bits. The time slots are transmitted or receives using 10 (or more) different frequencies (from which it derives that it is an FDMA system) for a total of 120 (or more) slots available to the system, which are naturally allocated on each occasion in order not to create interference problems.

The DECT multi-frame is illustrated in figure 3 and has a duration of 160 ms since it includes 16 frame of the type illustrated in figure 2 which, as mentioned above, have a duration of 10 ms.

In the DECT system each RFP must always be active on at least one bearer, in other words it must present at least one active channel in transmission, to send:
- in broadcast system information (inserted it in the Q channel);
- the RFP identity (inserted in the N channel);
- paging information (inserted in the P channel).

If an RFP has at least one channel active, this system information is radiated and is detectable by all the PPs situated in the coverage area of this RFP. If instead an RFP has no active bearer (of traffic, or dummy, or connectionless), it must start a 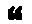 beacon 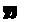 channel, named dummy bearer (or beacon channel), to guarantee the above mentioned broadcast service.

All this enables each PP, which receives this information, to identify all the Radio Fixed Parts RFPs within its range and find the RFP which offers the best guarantees for the purposes of the realization of an efficient setup and an optimal realization of a connection.

In fact, when the PP has recognized the system, it may synchronize/lock itself to the RFP which presents the highest signal, presumably to the nearest RFP. In this state (so-called idle locking), the RFP may receive a paging message coming from the network.

If the PP is connected with the system (as it wants to originate a call or in reply to a paging message coming from the network), it starts a set-up procedure using appropriate control messages inserted in the channel M.

The dummy channel is of simplex bearer type and therefore only exists in downlink direction (in FP⇒ PP direction).

As mentioned above therefore, before starting transmission on a bearer, each RFP must select the physical channel (or channels) to be used as beacon or dummy channel (when no real user traffic is in course) to enable the Portable Parts PPs to identify all RFPs within their range and connect themselves with it with an efficient set-up.

In this type of systems the real technical problem to be solved is to extend the coverage area offered by a single RFP in relation to the fact that the DECT system is typically a low power system as it provides the emission of signals presenting a bandwidth of 1728 KHz with a peak power of 250 mW.

In these conditions it is evident that - particularly in municipal areas and/or inside buildings - important coverage problems arise, and the area covered by a single RFP station is limited due to the difficulty of propagating the radio signal.

In other words, the obstacles consisting of the buildings present in the residential area in question (or the obstacles consisting of the walls present inside the building) limit the coverage area of a single RFP with the result that the network administrator is forced to install in such circumstances a considerable number of RFPs. In other words, he is forced to install repeaters aggravating the complexity of the system and increasing its cost.

### Background art

EP 663777 deals with the same technical problem at the base of this invention and provides the connection of an RFP with a plurality of antennas, for example through a coaxial cable, and therefore each antenna forms a sort of 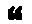 virtual 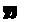 RFP. These antennas are oriented towards specific sectors of the municipal area or towards specific portions of the area situated inside a building, increasing considerably the area covered by the RFP in question.

It should be considered, however, that the connection made through the above mentioned cable causes synchronization problems between the Radio Fixed Part RFP and the various 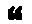 virtual 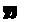 RFPs, due to the fact that the latter are placed at non-homogeneous distances and therefore the connecting cables between said RFP and the various 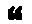 virtual 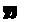 RFPs introduce some non-homogeneous delays.

The above mentioned synchronization problems are due to the need to compensate the above mentioned delays in order to comply with the specifications of the system which require the emission in air of the radio signal by the above mentioned 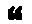 virtual 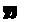 RFPs in the same instant.

### Object of the Invention

The object of this invention is to extend the coverage area of an RFP with respect to the area which may be covered with a single omnidirectional antenna without raising the above mentioned synchronization problems.

Another object is to solve the technical problems in question using economical and easy to implement technical solutions.

### Summary of the Invention

According to the invention, the extension of the coverage area of a basic Radio Fixed Part RFP is obtained by connecting the Radio Fixed Part RFP with a plurality of antennas, by means of a switching device. Each antenna illuminates a specific portion of the area surrounding this RFP and the same DECT frame is radiated in each area.

According to the invention, the radio resources assigned to the RFP are therefore distributed among the above mentioned plurality of antennas using a single control system for the access via radio to the same resources; in other words, making specific reference to the DECT system, using the same MAC (Medium Access Control Layer) control system.

The object of this invention is therefore a method for the extension of the coverage area realized in compliance with everything disclosed in claim 1.

Another object of this invention is a device realized in compliance with everything disclosed in claim 9. The features of the present invention which are believed to be novel are set forth with particularity in the appended claims.

### Brief description of the drawings

The invention, together with further objects and advantages thereof, may be understood with reference to the following description, taken in conjuctionwith the accompanying drawings, and in wich:
figure 1, already described, shows the structure of a DECT system;
figure 2, already described, shows the frame structure of the DECT system shown in figure 1;
figure 3, already described, shows the structure of a multi-frame of the DECT system shown in figure 1;
figure 4 shows a scan matrix of the 120 physical channels available at the DECT system shown in figure 1;
figure 5 shows one of the RFP stations of figure 1 connected with a plurality of sectorial antennas to reach the objects at the base of this invention.

### Detailed description of a preferred embodiment of the method according to the invention

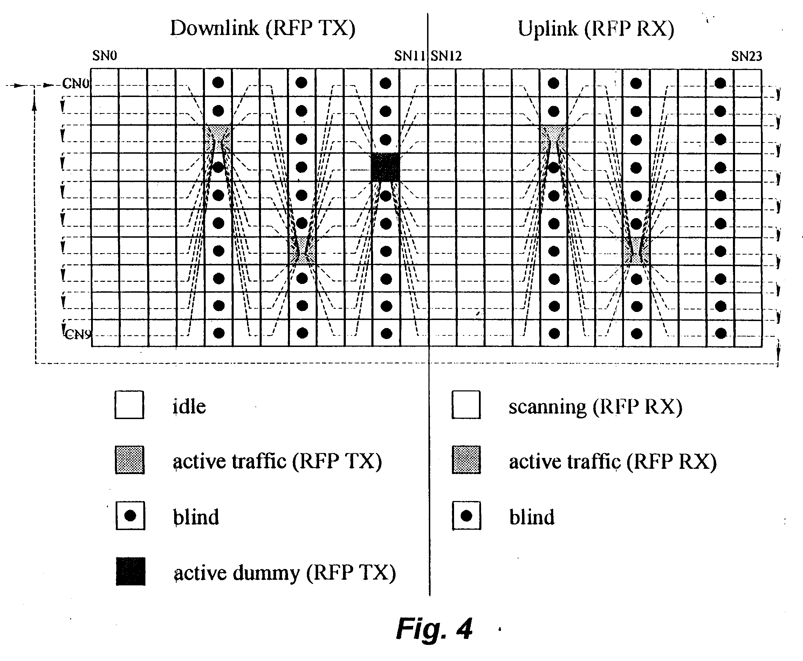

With particular reference to figure 4, to make the selection of the physical channel to be used as dummy channel, each RFP scans the above mentioned 24 x N (240 in the example in figure 4) channels available to the system. In fact, the structure of the DECT frame as shown in figure 2 provides that the 24 full slots (usually 12 in uplink and 12 in downlink) of an RFP may be allocated in combination with any one of the N (10 in the example in figure 4) assigned carrier frequencies.

As a result, the total number of duplex channels (TDD pair), intended as combination of a pair of equally spaced full slots of ½ frame and of radio frequency, is equal to 12 x N channels.

Of these potential channels only 24 may be simultaneously active when the RFP is equipped with only one transceiver. In fact, if the receiver/transmitter of this RFP is active in a particular slot on a certain RF bearer, it cannot receive/transmit in the interval of time defined by that slot on the other carriers. This leads to the definition of blind slot.

In the sphere of the above mentioned scanning in each slot the RFP receiver may be in one of the following operative states:
- Active ⇒ when a traffic bearer is receiving;
- Scanning ⇒ when it is listening while waiting for a possible bearer set-up attempt on that channel;
- Idle ⇒ it means that the RFP is not waiting for any bearer se-tup attempt on that channel. The receiver is ideally in idle state when the Radio Fixed Part RFP transmits.

For the scope of the present invention, the primary scan is that scan which is carried out in reception by the Radio Fixed Part RFP when this unit has a free receiver. The primary scanning method provides that all the available RF bearers are scanned in sequence one at a time for each DECT frame in growing order (Cni, Cni+1, Cni+2,...). The scan is carried out in cycles in such a way that, after having scanned the bearer with lower frequency (CN9 in the example in figure 4), RFP recommences the scan of the bearer with higher frequency (CN0). A complete scanning cycle of the 10 basic frequencies is therefore carried out in 100 msec.

In figure 4 the scanning sequence (dashed line) of the 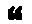 matrix 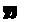 of the 12 physical channels is schematized.

The scan for the uplink half frame provides that the receiver is always in scanning with the exception of the blind and traffic slots.

In the downlink half frame the receiver is in idle state while the transmitter is active for both the traffic and dummy bearers.

From the figure it is evident that, for all the slots in which an active channel (active traffic or dummy bearer) is allocated, the regular scanning flow is modified. In fact, in these intervals of time the RF bearer is always fixed and a frequency jump from the bearer in scan to the active channel bearer is therefore necessary.

Before starting the transmission on a bearer, each Radio Fixed Part RFP must select the physical channel analyzing the contents of a table in which the channels are stored in order on the basis of the received field intensity (RSSI, Received Signal Strength Indicator).

The table is organized in zones of appartenance enclosed between a minimum and maximum value of the field level. The channels with RSSI measurement below the minimum value are considered quiet and may be selected immediately, while the channels with an RSSI measurement above the maximum value are considered busy and should never be selected. The channels with an RSSI measurement between the two minimum and maximum limits are put in order on the basis of the zone of appartenance.

On completion of the channels table, the interference check step is performed and the dummy channel is eventually changed, selecting it from the above mentioned list/table.

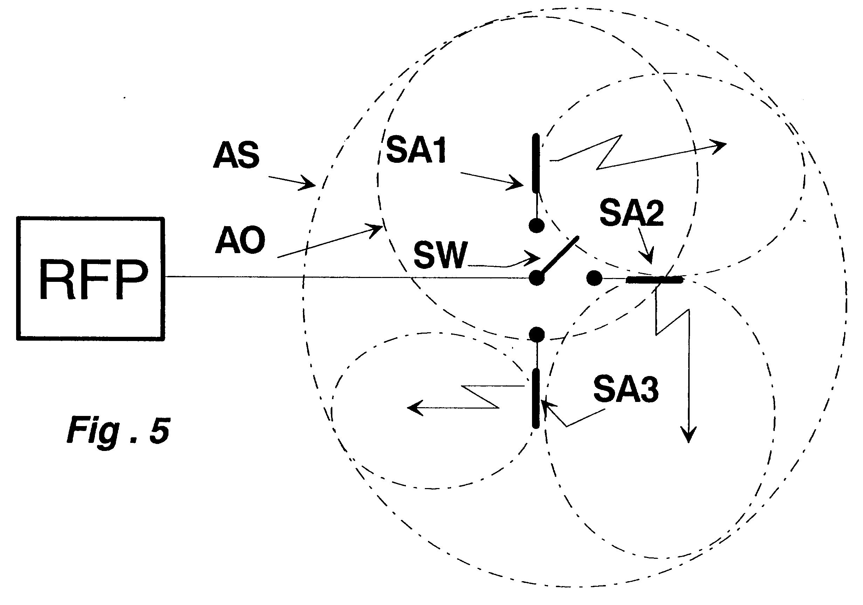

The solution of the technical problem at the base of this invention is schematized in figure 5 which shows the connection of an RFP with a plurality of sectorial antennas SA through a selector SW.

Figure 5 also illustrates, with dashed and dotted line, the area AO which may be covered by the RFP using an omnidirectional antenna (in the case of figure 5 it is assumed that the omnidirectional antenna in question is composed of the antenna SA1), while, again with dashed and dotted line, the area AS is illustrated which may be covered by the above mentioned when it is connected with the n sectorial antennas SA1, ....., SA3, through said selector SW.

It is evident that the coverage area of the Radio Fixed Part RFP in question is greatly increased in accordance with the above mentioned object.

In particular, in order to prevent the above mentioned synchronization problems, the method at the base of this invention provides the sequential execution of the following steps:
1. - subdivision of the matrix of channels illustrated in figure 4 in a number of sectors equal to the number of the SA installed antennas;
2. - activation, in absence of active connection oriented or connectionless traffic channels, of at least one dummy channel for each sector;
3. - transmission, on each active dummy channel or traffic channel in a sector, of a specific system information which inhibits the access of the portable parts PPs to channels allocated in a sector of the matrix of channels different from that to which the dummy channel or traffic channel received belongs.

With reference to the step 2, the information of Radio Fixed Part Identity or RFPI radiated on the active channels (or, in absence of active channels, on the dummy channel) may - on the basis of the studies carried out by the Applicant - be the same in all sectors, or vary from one sector to another.

If the Radio Fixed Part Identity RFPI is univocal, the advantage is obtained of having to assign only one identification for each RFP (regardless of the number of sectors) and therefore the network administrator in question has the possibility of limiting the number of identifications, and therefore of radio parts, to be managed.

If on the contrary the Radio Fixed Part Identity RFPI varies for one sector to another sector, the advantage is obtained of optimizing the radio accesses by the portable parts PP as each sector is 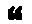 visible 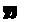 to the PP like an RFP equipment.

According to the invention, each sector of the matrix of channels may include an equal number of channels or a number of channels which differs from one sector to another sector.

With particular reference to figure 4, if the matrix is split into an equal number of sectors, for example into three sectors of four full slot channels of duplex type (4 time slots in uplink and 4, spaced 4 msec. apart, in uplink) each, the first sector includes the channels SN0, ....., SN3, the second sector the channels SN4, ....., SN7, and the third sector the channels SN8, ....., SN11.

Alternatively, as mentioned above, the matrix may be split into a number of channels which differs from one sector to another, for example always into three sectors in which six full slot duplex channels SN0, ....., SN5 are allocted to the first sector, three full slot duplex channels, respectively SN6, ....., SN8 and SN9, ....., SN11 are allocated to each of the second and third sectors.

This possibility is particularly useful when a predetermined geographical area usually creates a much greater traffic than that arising from the remaining two geographical areas facing the RFP station and it is therefore interesting to differentiate the acceptance capacity of the number of simultaneous telephone calls arising from the above mentioned geographical areas.

According to the invention, the availability of channels for each sector may be rigidly assigned or vary dynamically on the basis of the specific traffic requests in the specific sectors.

To implement a dynamic variation in the allocation of the radio resources, the method according to the invention uses an algorithm of arbitration preferably adapted to:
- monitor the number of channels assigned to each sector;
- survey at intervals of time of predetermined length the number of channels active in each sector;
- calculate the percentage of the degree of occupation of each sector;
- redistribute the channels among the single sectors in such a way, for example, as to level the percentage of the degree of occupation of all the sectors.

This algorithm of arbitration also subtracts channels from the sectors with a lower load of occupation and assigns them to the sectors with a higher load of occupation.

It is obvious that the method according to the invention makes it possible to create a sort of 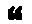 system of intelligent antennas 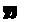 , not in the classic sense of this term in which the illuminated area is oriented on each occasion in different directions (for example, in order to 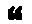 pursue 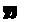 a user part in movement to obtain its optimal 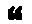 illumination 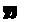 ), but in the sense of dynamically and automatically varying the number of channels assigned to each sector in order to optimize the distribution of the radio resources on the basis of the specific traffic requests in the single sectors.

As limit case, if all the users of the Radio Fixed Part RFP in question are concentrated in only one of the originally assumed sectors, the algorithm of arbitration could assign to the sector in question all the radio resource available transforming the system with array of antennas suggested by the present application into a standard system in which a single antenna/radiating system is provided for each fixed transceiver station RFP.

Without departing from the scope of the present invention, it is obviously possible to use an algorithm of arbitration based on different criteria from the one described above, i.e. levelling the degree of occupation of the single sectors

Obviously each sector may be illuminated by a pair of antennas, if it is intended to enjoy the antenna diversity option, for example to create a system with spatial diversity.

### Advantages of the invention

Applying the method at the base of this invention it is possible to easily increase the coverage area of an RFP without running into the synchronization problems typical of these solutions of known type.

However, there is a reduction of the capacity of the system, consisting in a reduction of the number of simultaneous communications that may be supported by the RFP. This traffic reduction tends, however, to dissolve as soon as each sector has traffic to clear.

However, where the coverage problems dominate those of the capacity of traffic disposal, the adoption of the method at the base of the present invention is fully justified.

If the administrator of the TDMA system realized in compliance with the invention opts for a dynamic allocation of the radio channels among the different sectors, the method of the invention makes it possible to construct a 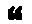 system of intelligent antennas 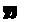 , as described above.

Therefore, while a particular embodiment of the present invention has been shown and described, it should be understood that the present invention is not limited thereto since other embodiments may be made by those skilled in the art without departing from the scope thereof. It is thus contemplated that the present invention encompasses any and all such embodiments covered by the following claims.

## Claims

1. Method for the extension of the coverage area of a fixed transceiver station (RFP) belonging to a system of the Time Division Multiplex Access or TDMA type which includes a plurality of said fixed transceiver stations (RFP) which are connected:
• by means of radio channels with portable user parts (PP), and
• by means of a physical support, with at least one switching network through a fixed part (FP),
the signals transmitted in this system being organized in frame of predetermined duration which are subdivided into two half-frame, in each of which are allocated C time slots transmitted or received using K carrier frequencies, for a total of K x C channels available to the system; each one of said fixed transceiver stations (RFP) being adapted to cause the activation of at least one beacon channel or dummy bearer to transmit to the above mentioned portable user parts (PP) system information, if they do not present at least one active channel of the above mentioned K x C channels,
characterized by the fact that it provides the sequential execution of the following steps:
a) connecting to said fixed transceiver station (RFP) a number N of sectorial antennas (SA) through a switching device (SW);
b) subdividing said matrix of channels into N sectors;
c) activating, in absence of active connection oriented or connectionless traffic channels, a dummy channel for each sector;
d) transmitting, on each active dummy channel or traffic channel of a sector, a specific system information which inhibits the access of the portable parts (PP) to channels allocated in a different sector of the matrix of channels from that to which the received channel belongs.

2. Method as claimed in claim 1, characterized by the fact that in said step b) each one of the N sectors includes a number of channels K * C which differs from one sector to another.

3. Method as claimed in claims 1 or 2, characterized by the fact that the number of channels assigned to each sector is assigned in rigid manner.

4. Method as claimed in claims 1 or 2, characterized by the fact that the number of channels assigned to each sector is dynamically variable on the basis of a predetermined algorithm of arbitration.

5. Method as claimed in claim 4, characterized by the fact that said algorithm of arbitration provides the sequential execution of the following steps:
- monitoring the number of channels assigned to each sector, or the number of channels assigned to a generic sector;
- surveying at intervals of time of predetermined duration the number of active channels in each sector;
- calculating the percentage of the degree of occupation of each sector;
- redistributing the channels among the single sectors in such a way as to level the percentage of the degree of occupation of all the sectors.

6. Method as claimed in claim 1, characterized by the fact that in said step d) the above mentioned transmission on each dummy channel or active traffic channel of a sector also provides the transmission of an identity information (RFPI) of the fixed transceiver station (RFP) which is the same in all the sectors.

7. Method as claimed in claim 1, characterized by the fact that in said step d) the above mentioned transmission on each dummy channel or active traffic channel of a sector also provides the transmission of an identity information (RFPI) of the fixed transceiver station (RFP) which differs from one sector to another.

8. Method as claimed in the claims 1-7, characterized by the fact that each sector is illuminated by a pair of antennas.

9. System for the extension of the coverage area of a fixed transceiver station (RFP) belonging to a cordless DECT system which includes a plurality of said fixed transceiver stations which are connected via radio with portable user parts (PP) and through a physical support with at least one switching network through a fixed part (FP), the signals transmitted in this system being organized in frame of predetermined duration which are subdivided into two semi-frame, in each of which are allocated C time channels or time slots transmitted or received using K frequencies for a total of K x C channels available to the system which are organized according to a matrix of C lines and K columns; each of said fixed transceiver stations (RFP) being conformed in such a way as to cause the activation of at least one beacon channel or dummy bearer to transmit to the above mentioned portable user parts (PP) system information if they do not present at least one of the above mentioned K x C active channels,
characterized by the fact that each fixed transceiver station is connected with a plurality of sectorial antennas (SA) through a switching organ (SW).

10. System as per claim 9, characterized by the fact that each of said sectorial antennas is composed of a pair of antennas.
